# EUROPEAN PATENT APPLICATION

(11) **EP 4 699 775 A1**
(43) Date of publication of application: **25.02.2026**
(21) Application number: 24195878.4
(22) Date of filing: 22.08.2024
(51) Int. Cl.: B29C 45/00, B01L 3/00, B01L 3/02

(54) **PLASTIC LABORATORY CONSUMABLE WITH A PRESCRIBED WETTABILITY CHARACTERISTIC AND METHOD OF MANUFACTURE THEREOF**

(71) Applicant: Sartorius Liquid Handling oy, 00880 Helsinki (FI)
(72) Inventor: MALINEN, Antti, 00880 Helsinki (FI); PILVIÖ, Matti, 00880 Helsinki (FI)
(74) Representative: Laine IP Oy

(57) **Abstract**

According to an example aspect of the present invention, there is provided a method of manufacturing a plastic laboratory consumable, the method comprising: providing a metallic mould, said metallic mould being a substantial counterpart to a plastic laboratory consumable to be moulded with said metallic mould, texturing a surface of the metallic mould thereby creating a textured metallic mould having a nanoscale surface texture, and moulding a plastic laboratory consumable from a plastic material by using the textured metallic mould such that the plastic laboratory consumable receives a complementary nanoscale surface texture (110, 210) having at least one wettability characteristic for at least a first liquid .

## Description

### FIELD

The present disclosure relates to plastic laboratory consumables and wettability characteristics thereof. In particular, the present invention relates to a method of manufacturing a plastic laboratory consumable. Additionally, the present invention relates to a moulded plastic laboratory consumable.

### BACKGROUND

A pipette, such as a micropipette, provides handling and dispensing of liquids with predetermined and prescribed volumes. A disposable plastic pipette tip attachable to such a pipette affects the liquid handling properties of said pipette. For optimal liquid handling, suitable wettability characteristics for such instruments as well as other laboratory consumables, are desirable.

Wettability characteristics of a surface, such as hydrophobicity and hydrophilicity, are obtainable with additional chemical compounds and surfactants, for example. However, some such chemicals that exhibit beneficial wettability characteristics may be hazardous, endocrine disruptors, carcinogenic, or otherwise unsafe, making their use in laboratory consumables problematic. As such, some products and compounds conferring wettability characteristics to surfaces of medical instruments and/or biotechnological equipment, may have been deemed unsafe, or are otherwise controlled or outright banned in some jurisdictions. For example, per- and polyfluoroalkyl substances, PFAS, such as perfluorooctanoic acid, PFOA, may display a suitable wettability characteristic, for example in terms of hydrophilicity and/or hydrophobicity, although regulation of such compounds and potential health risks may hinder their use. Moreover, such an addition of surfactants and compounds may typically comprise additional steps in terms of manufacturing as well as changes in mechanical, biological and/or chemical properties, and/or biochemical compatibility of said laboratory consumable, for example.

Thus, there is a need for methods, apparati, products and structures for obtaining suitable and at least to an extent substance-specific wettability characteristics for laboratory consumables and plastic laboratory consumables, such that at least the abovementioned problems are alleviated, reduced or minimized.

### SUMMARY OF THE INVENTION

The invention is defined by the features of the independent claims. Some specific embodiments are defined in the dependent claims.

According to a first aspect of the present invention, there is provided a method of manufacturing a plastic laboratory consumable, the method comprising providing a metallic mould, said metallic mould being a substantial counterpart to a plastic laboratory consumable to be moulded with said metallic mould; texturing a surface of the metallic mould thereby creating a textured metallic mould having a first nanoscale surface texture; and moulding a plastic laboratory consumable from a plastic material by using the textured metallic mould such that the plastic laboratory consumable receives a complementary nanoscale surface texture having at least one wettability characteristic for at least a first liquid.

Certain embodiments of the first aspect may include at least one feature from the following bulleted list:
- The texturing is carried out using a nanolaser, a femtosecond laser, or a pulsed ultrashort laser.
- The first nanoscale surface texture of the textured metallic mould comprises a laser-induced periodic surface structure, LIPSS.
- The complementary nanoscale surface texture comprises nanoscale pores and/or a nanoscale pattern.
- The complementary nanoscale surface texture comprises a three-dimensional surface texture.
- The complementary nanoscale surface texture comprises a repetitive partially elevated grid pattern.
- The repetitive partially elevated grid pattern comprises a plurality of shapes.
- The shapes comprise interconnected elevated edge portions in a form of a rectangle.
- At least one elevated diagonal portion connects two opposing corners of the rectangle.
- The complementary nanoscale surface texture comprises a repetitive surface structure, for example a repetitive surface structure having protrusions and/or depressions arranged in a pattern.
- The first liquid is selected from the group consisting of: water, glycerol solution, protein solution, sedimented cell liquid.
- The at least one wettability characteristic comprises a first wettability characteristic, said first wettability characteristic being comprised in a first region of the complementary nanoscale textured surface.
- Said first region is ring-shaped along the periphery of a plastic pipette tip at the inner surface of the plastic pipette tip.
- Said first wettability characteristic for at least the first liquid is selected from the following group: lyophobicity, lyophilicity, hydrophobicity, hydrophilicity, lipophobicity, lipophilicity, oleophobicity, or oleophilicity.
- Said first wettability characteristic for at least the first liquid is hydrophobicity, such as ultrahydrophobicity.
- The at least one wettability characteristic comprises a second wettability characteristic for the first liquid, said second wettability characteristic comprised in a second region of the complementary nanoscale textured surface.
- Said second wettability characteristic is different from the first wettability characteristic.
- Said second wettability characteristic is selected from the following group: lyophobicity, lyophilicity, for example hydrophobicity, hydrophilicity, lipophobicity, lipophilicity, oleophobicity or oleophilicity.
- Said second wettability characteristic is hydrophilicity.
- The at least one wettability characteristic is defined by a contact angle from 95 to 115 degrees, such as 104.5 degrees for the first liquid.
- The at least one wettability characteristic is defined by a contact angle of at least 95 degrees, such as at least 100 degrees, such as at least 120 degrees, such as at least 150 degrees.
- The at least one wettability characteristic is defined by a contact angle of less than 90 degrees, such as less than 85 degrees, such as less than 80 degrees.
- The moulding comprises injection moulding.
- The metallic mould comprises a metal material selected from the group consisting of: steel and/or stainless powder steel.
- The plastic material comprises a thermoplastic material, which is preferably selected from the group consisting of: polypropylene or polystyrene.
- The moulded plastic laboratory consumable is a pipette tip comprising the complementary nanoscale surface texture at least on an inner surface of the pipette tip.

According to a second aspect of the present invention, there is provided a moulded plastic laboratory consumable comprising at least one complementary nanoscale surface texture with at least one wettability characteristic for a first liquid.

Certain embodiments of the second aspect may include at least one feature from the following bulleted list:
- The moulded plastic laboratory consumable is a pipette tip.
- The at least one complementary nanoscale surface texture is present at least on an inner surface of the pipette tip.
- A depth of the complementary nanoscale surface texture of the laboratory consumable is in a range between 5 µm and 90 µm.
- A depth of the complementary nanoscale surface texture of the laboratory consumable is at least 5 µm, such as at least 10 µm, such as at least 20 µm, such as at least 30 µm.
- A depth of the complementary nanoscale surface texture of the laboratory consumable is less than 90 µm, such as less than 70 µm, such as less than 50 µm.
- The pipette tip is a low retention pipette tip and/or a low binding pipette tip.

Considerable advantages are obtained by means of certain embodiments of the present invention. A method of manufacturing a plastic laboratory consumable and a moulded plastic laboratory consumable are provided. The method allows manufacturing of a moulded plastic laboratory consumable from plastic material having a complementary nanoscale surface texture having at least one wettability characteristic for at least a first liquid. For example, the consumable may be a pipette tip having a hydrophobic inner surface.

### BRIEF DESCRIPTION OF THE DRAWINGS

FIG. 1A and 1B illustrate a pattern in accordance with at least some embodiments of the present disclosure;
FIG. 2A and 2B illustrate another pattern in accordance with at least some embodiments of the present disclosure;
FIG. 3 illustrates an example plastic laboratory consumable capable of supporting at least some embodiments of the present disclosure;
FIG. 4A and 4B illustrate an example of a part of a mould capable of being utilized in connection with at least some embodiments of the present disclosure; and
FIG. 5A and 5B illustrate another example of a part of a mould capable of being utilized in connection with at least some embodiments of the present disclosure.

### EMBODIMENTS

Within this document, the term "first liquid" is used. The meaning of said term within this document also includes a completely dissolved solution, a mixture of at least two liquids, a dispersion of a solid in a liquid medium, a suspension of a solid in a liquid medium, an emulsion of a solid in a liquid medium, and a sedimented cell liquid.

A "contact angle" of a liquid droplet may be used to characterize and classify wettability characteristics for a three-phase system, i.e., a system comprising a liquid phase, a gaseous phase and a solid phase as well as interfaces therebetween. The wettability characteristic of the solid phase and/or surface thereof with respect to the liquid environment and gaseous environment, may be deduced from such a contact angle. In other words, for a liquid droplet on a solid surface, the angle between the solid-liquid interface and gas-liquid interface describes the wettability of the solid phase. The contact angle is the angle between the solid-liquid interface and liquid-gas interface of said droplet. Therefore, typically contact angle is defined for minute volumes of liquid, or a "drop" or "droplet". For example, typically such an angle for a "wettable" solid phase is from 0 to 90 degrees, while for a "non-wettable" solid phase such an angle is from 90 to 180 degrees. In terms of water, wettable and non-wettable correspond to hydrophilicity and hydrophobicity of the solid phase, respectively. Moreover, ultrahydrophobicity or superhydrophobicity may be defined as a contact angle from 150 degrees to 180 degrees.

In the context of the present disclosure, in general terms, a wettable is to be understood as "lyophilic", and non-wettable is to be understood as "lyophobic". Moreover, for instances wherein the liquid in question is water, wettable is to be understood as "hydrophilic" and non-wettable as "hydrophobic". Therefore, "lyophobic" and "lyophilic" are considered to be superordinate concepts to "hydrophobic" and "hydrophilic", respectively. Moreover, in terms of liquid comprising lipid or plurality thereof, a surface may be "lipophobic" or "lipophilic". For liquids comprising oils, a surface may be "oleophobic" or "oleophilic". As such, a person skilled in the art understands that "non-wettable" and "wettable" as well as "lyophobic" and "lyophilic" (and subordinates thereof) may be construed as relative terms, and as such the contact angle may provide a more quantifiable description of wettability or lack thereof.

In accordance with the present disclosure, there is provided a plastic laboratory consumable having a complementary nanoscale textured surface thereby providing a wettability characteristic for at least one liquid, such as water or liquid comprising water.

A "laboratory consumable" is to be understood as an instrument, equipment and a part thereof used, for example, in a laboratory setting. Such laboratory consumables include labware, for example, Petri Dishes, cuvettes, funnels, test tubes, beakers, pipettes and pipette tips. A laboratory consumable may be disposable, single-use or multi-use, for example. In at least some embodiments, the laboratory consumable is a pipette tip, for example, suitable for a micropipette for controlled liquid handling and dispensing. In at least some embodiments, a pipette tip in accordance with the present disclosure is a low retention tip. A low retention tip may minimize liquid adhesion and/or retention on the surface of such a tip. Such feature may be beneficial at least in that it may reduce risk of sample loss, as well as minimize risk of inaccurate pipetting. It is noted that although "low retention tip" as a term, may not necessarily have a standardized definition or specification, in the context of the present disclosure such a low retention tip is to be understood as a pipette tip comprising at least one region having a lyophobic wettability characteristic for at least one liquid.

The term "nanoscale texture" and "nanotexture" as to be understood in the context of the present disclosure, refers to physical surface structures having dimension, pattern and/or shape so as to obtain wettability characteristics for a liquid in question. For example with respect to water, nanotexture may refer to a repetitive surface structure having protrusions and/or depressions arranged in a pattern.

In the context of the present disclosure, the term "first nanoscale surface texture" refers to a nanoscale surface texture of the mould.

In the context of the present disclosure, the term "complementary nanoscale surface texture" refers to a nanoscale surface texture of the plastic laboratory consumable.

In at least some embodiments, a contact angle for a liquid at a nanotexture, a complementary nanoscale surface texture or parts thereof, is from 95 to 115 degrees, such as from 100 to 110 degrees, for example 104.5 degrees.

In at least some embodiments, a contact angle for a liquid at a nanotexture, a complementary nanoscale surface texture or parts thereof, is at least 95 degrees, such as at least 100 degrees, such as at least 120 degrees, such as at least 150 degrees.

In at least some embodiments, the wettability characteristic is obtained via a complementary nanoscale surface texture comprising a partially elevated grid pattern. Such a partially elevated grid pattern may be a periodic surface structure wherein said grid pattern is repetitive and/or periodic.

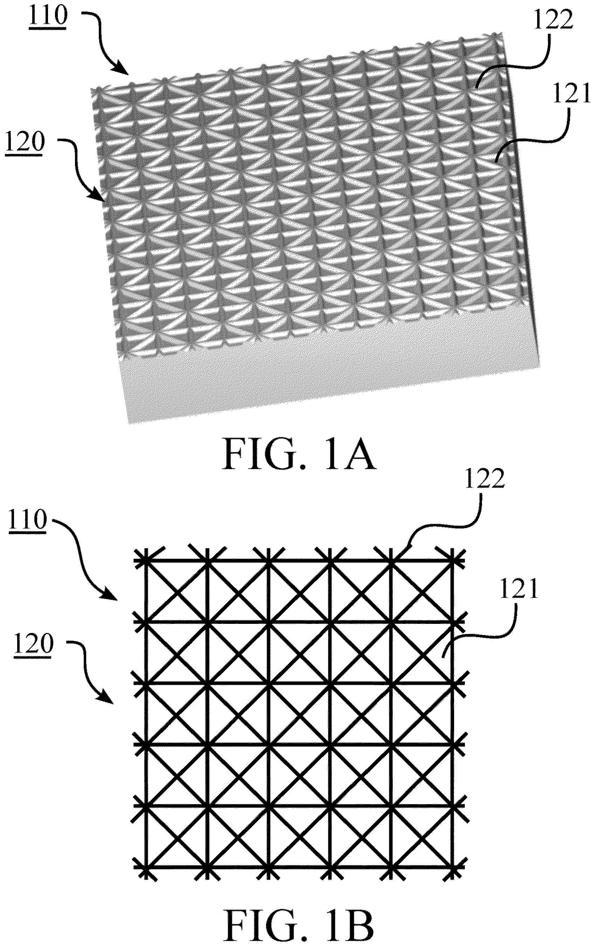

FIG. 1A & 1B illustrate a complementary nanoscale surface texture 110 of a plastic laboratory consumable in accordance with at least some embodiments of the present disclosure. In other words, FIG. 1A & 1B depict the same structural pattern, albeit from different perspectives. In FIG. 1A & 1B, a periodic structure 120 is depicted, wherein said period structure 120 comprises a rectangular and repetitive pattern having protruding edges 122 that protrude from a surface 121. Such a complementary nanoscale surface texture 110 may provide wettability characteristics for at least one liquid. As can be appreciated from the figures, diagonals of said rectangular patterns comprise protrusions connecting two corners of said rectangular pattern as well. The protrusions define openings, wherein each opening has, for example, a triangular shape. A depth of the complementary nanoscale surface texture may be in a range between 5 µm and 90 µm, for instance. As a consequence, a hydrophobic surface can be provided for the consumable, for instance. The first nanoscale surface texture of the mould is an inverse of the complementary nanoscale surface texture 110 of the laboratory consumable.

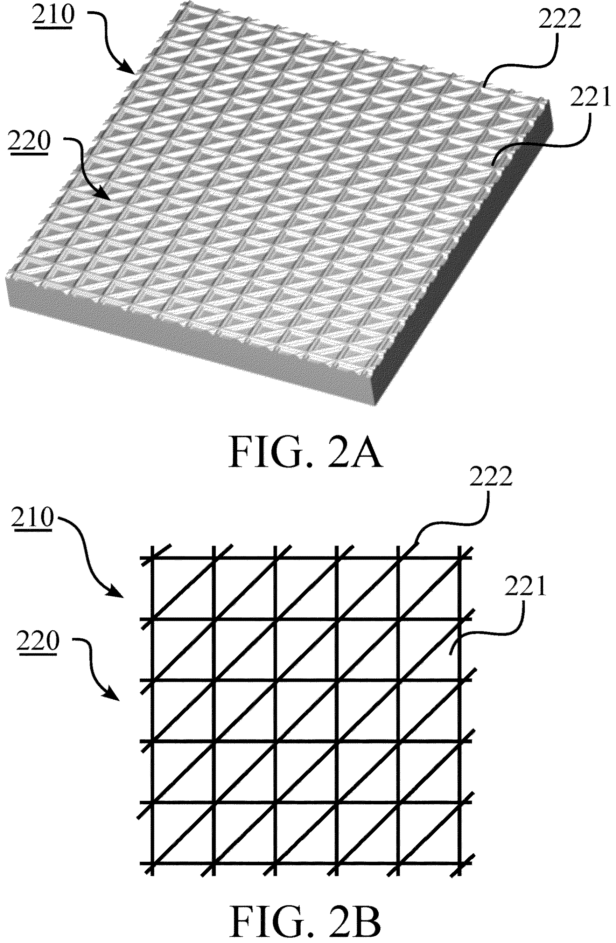

FIG. 2A & 2B illustrate a complementary nanoscale surface texture 210 suitable for a plastic laboratory consumable in accordance with at least some embodiments of the present disclosure. In other words, FIG. 2A & 2B depict the same structural pattern from different perspective. In FIG. 2A & 2B, a periodic structure 220 is depicted, wherein said periodic structure 220 comprises a rectangular and repetitive pattern having protruding edges 222 that protrude from a surface 221. Such a complementary nanoscale surface texture 210 may provide wettability characteristics for at least one liquid. As can be appreciated from the figures, a single diagonal of said rectangular patterns comprise elongated protrusions. As a person skilled in the relevant art understands, the complementary nanoscale surface texture 210 as depicted in FIG. 2A & 2B, is complementary or substantially complementary to the first nanoscale surface texture of a mould.

A benefit of such a three-dimensional surface texture is that wettability characteristics may be construed for a desired gas-liquid-solid interface. Such structures may be verified, for example using a CT nano scanner.

A person skilled in the relevant art also understands that expression such as "wettability characteristic for a liquid" is to implicitly mean that the solid phase for which such a property is discussed, is taken into account. It is noted that in at least some embodiments, different solid phase materials, such as plastics, are used, for which a complementary nanoscale textured pattern is provided. In at least some embodiments, the plastic comprises a thermoplastic material, which is preferably selected from the group consisting of: polypropylene or polystyrene.

Moreover, said surfaces provide other benefits and advantages. For example, considering a plastic laboratory consumable, such as a pipette tip, lyophobicity with respect to a liquid may aid in transfer and/or movement of said liquid, which in turn may be especially beneficial in circumstances wherein small liquid volumes are to be used. This may be the case, for example, with expensive and/or scarce liquid samples, and other liquids potentially having a low volume. As such, low retention tips in accordance with the present disclosure provide advantages with respect to manufacturing as well as use of products described herein. For example, lyophobic regions may assist in the improvement of liquid handling in terms of dispensing volume accuracy and precision.

In at least some embodiments, a liquid for which the wettability characteristic is prescribed, is water. Additionally or alternatively, the liquid having at a wettability characteristic may be combination of substances to which the at least one wettability characteristic is obtained, such as a combination of water and a reagent. In at least some embodiments, the liquid is at least one of: a glycerol solution or a protein solution.

In at least some embodiments, the solutions and liquids of the at least one liquid are a completely dissolved solution or a mixture of two or more liquids. In at least some embodiments, a dispersion, suspension and/or emulsion of a solid in a liquid medium is the at least one liquid to which a wettability characteristic is obtained, for example. In at least some embodiments, a sedimented cell liquid is said liquid to which nanoscale textured surface of the plastic laboratory surface exhibits the wettability characteristic.

In at least some embodiments, the wettability characteristics are different at different regions of the plastic laboratory consumables. For example, in at least some embodiments, an inner surface of a pipette tip comprises a first region configured to be hydrophobic and a second region configured to be hydrophilic for a liquid. Moreover, in at least some embodiments, the said first region has a different wettability characteristic to different liquids, for example.

A person skilled in the relevant art also understands that a combination of liquids, such as those disclosed above may be applicable. For example, the complementary nanoscale surface texture may comprise a plurality of different regions for a plurality of liquids, said plurality of regions comprising wettability characteristics to at least one liquid of said plurality of liquids. A benefit of such a structure and such an approach, wherein a plurality of regions is employed, is that different liquids may behave differently at a surface of the plastic laboratory consumable. For example, in at least some embodiments, wherein the plastic laboratory consumable is a pipette tip, the inner portion of said pipette tip comprises different regions with different wettability characteristics. In some such embodiments, a first region is lyophobic to a first liquid, while said first region is lyophilic to a second liquid. As such, the second liquid may be retained on said first region (i.e., lyophilicity), while the first liquid may be dispensed (i.e., lyophobicity).

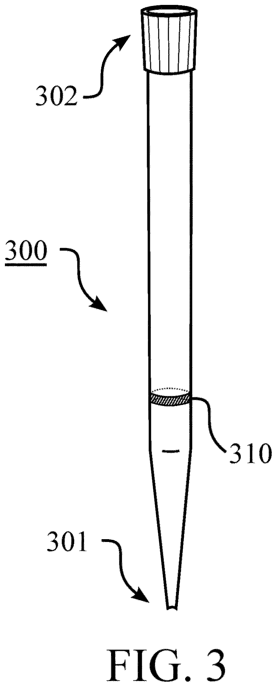

FIG. 3 illustrates a plastic pipette tip 300 according to at least some embodiments. The plastic pipette tip 300 comprises a tip portion 301 and a connecting portion 302. Volumes of liquid may be retained and disposed via tip portion 301. The pipette tip may be connected to a micropipette, for example, via said connecting portion 302. As can be appreciated from FIG. 3, the plastic pipette tip comprises a first region 310, having a first wettability characteristic for a liquid. Moreover, said first region is ring-shaped along the periphery of the plastic pipette tip at the inner surface of the plastic pipette tip.

It is noted that in at least some embodiments wherein the plastic laboratory consumable comprises a pipette tip, a region may be even and/or smooth in terms of surface quality. Such may be the case, for example, for the tip portion of a pipette tip, such as the tip portion 301 of FIG. 3. Such embodiments may be beneficial in that such structure, and patterns thereof, may eliminate or reduce retention of liquid, such as liquid droplets, at said region.

The plastic laboratory consumables having a wettability characteristic, or plurality thereof, provide benefits and advantages. Because the wettability characteristics are obtained at least in part via structural patterns on a surface of said plastic laboratory consumables, additional compounds, which may be harmful or otherwise not preferred, may not necessarily be needed. Moreover, other benefits and advantages may arise from the embodiments disclosed herein as well.

In accordance with the present disclosure, there is provided a method for producing a plastic laboratory consumable. In said method, a metallic mould is provided. Said metallic mould is configured, together with a suitable plastic material, to provide a plastic laboratory consumable. As such, the metallic mould is a substantial counterpart to the plastic laboratory consumable to be moulded with said metallic mould. The metallic mould may comprise steel and/or stainless powder steel. The metallic mould may comprise a plurality of parts which together provide the counterpart for the shape of the plastic laboratory consumable to be moulded. Such a plurality of parts may be separate from one another, for example. The term "substantial counterpart" is to be understood as a counterpart, that is configured to provide the plastic laboratory consumable with a general shape and geometry. A person skilled in the art understands, that depending on the moulding practices and a moulding method used, differences between the ideal shape and moulded shape may occur. For example, imperfections in terms of seams and bumps may arise, especially in circumstances wherein a plurality of parts of the metallic mould are used for moulding said plastic laboratory consumable.

The metallic mould is textured, and thereby a textured metallic mould is created. Thus, such a textured metallic mould has the general shape of the metallic mould but additionally has a nanoscale textured surface (a first nanoscale surface texture) at least in part of the surface of the textured metallic mould. Nanoscale textured surface therefore, is a substantial counterpart for the surface of the plastic laboratory consumable, or regions thereof. It is noted, that the nanoscale textured surface of the textured metallic mould itself does not necessarily comprise wettability characteristic of the plastic laboratory consumable, as said nanoscale textured surface of the metallic mould is a counterpart to the surface to which said properties are to be conferred.

Using the textured metallic mould described above, a plastic laboratory consumable is moulded. As such, the plastic laboratory consumable receives a complementary nanoscale surface texture having at least one wettability characteristic for at least one liquid. Said complementary nanoscale surface texture is thus, complementary to the nanoscale textured surface (the first nanoscale surface texture) of the textured mould. The wettability characteristic is for at least one liquid, such as a first liquid, for example water or a solution. A person skilled in the relevant art further understands, that the created textured metallic mould may be used to mould a plurality of plastic laboratory consumables, and as such the methods described herein allow for a large-scale manufacturing of a plurality of plastic laboratory consumables for example, sequentially or concurrently.

In at least some embodiments, a plastic laboratory consumable may be moulded using plastic injection moulding.

In at least embodiments wherein said plastic laboratory consumable is a pipette tip, for example a micropipette, the mould comprises at least two portions; an outer portion and an inner portion. The outer portion may comprise a hollow cone-shape cavity mould to which the inner portion may be arranged so as to form at least part of the plastic laboratory consumable therebetween when moulded. In at least some embodiments, the inner portion of the mould receives a first nanoscale surface texture. Therefore, the moulding provides a mirror replication of the first nanoscale surface texture in an inner surface of the pipette tip having thus, a complementary nanoscale surface texture. The inner portion of the mould may also be known as a "core pin" of the metallic mould for a pipette tip or a "conical piece". Therefore, a complementary nanoscale surface texture to the inner surface of the plastic tip is created.

In at least some embodiments, the metallic mould is textured using a laser-induced periodic surface structure, LIPSS so as to form a textured metallic mould. Therein, a nanolaser may be used to ablate a surface of a metallic mould, thereby creating a predetermined, structural and periodic pattern. Laser-Induced Periodic Surface Structures are a phenomenon that occurs when a material is irradiated with laser radiation. Such a process may be a combination of ablation, melting and resolidification of a surface of the mould, for example. These structures are characterized by their periodic pattern, which can be on the scale of nanometers to micrometers. LIPSS are formed when a laser beam interacts with a material surface, thus causing periodic surface modulations. The structures can be created on a variety of materials, including metals, semiconductors and dielectrics.

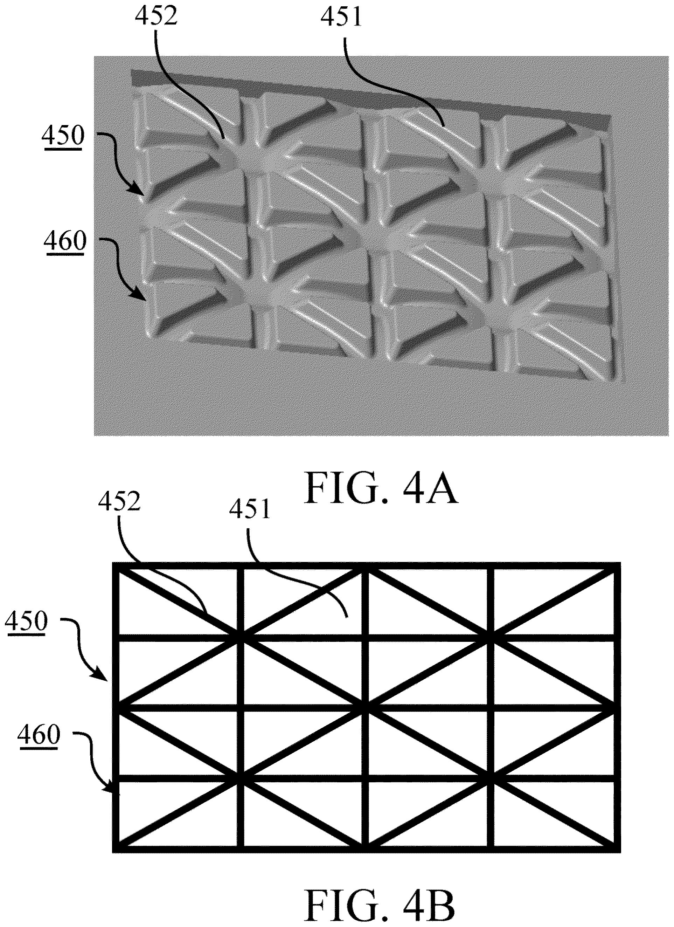

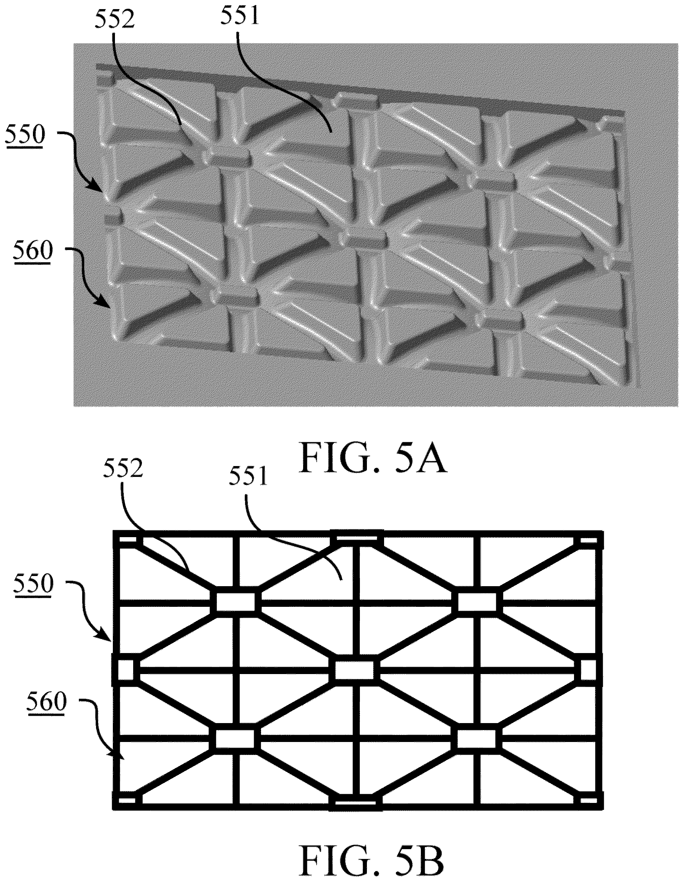

FIG. 4A & 4B as well as FIG. 5A & 5B each illustrate separate examples of parts of moulds capable of being utilized in connection with at least some embodiments of the present disclosure. The mould is a metallic mould. The mould is a substantial counterpart to a plastic laboratory consumable to be moulded with said metallic mould. The surface of the mould is textured, thereby creating a textured metallic mould having a first nanoscale surface texture. Consequently, moulding a plastic laboratory consumable from a plastic material by using the textured metallic mould can take place such that the plastic laboratory consumable receives a complementary nanoscale surface texture 110, 210 having at least one wettability characteristic for at least a first liquid.

Referring to FIG. 4A & 4B, a part of a mould 450 is illustrated. Figures 4A & 4B depict the same structural pattern, albeit from different perspectives. The part of the mould 450 may be part of a textured metallic mould, for example. Said part of the mould comprises protrusions 451 and depressions 452 that form, at least in part, a first nanoscale surface texture 460 on said part of the mould. In terms of elevation, such protrusions and depressions are relative to one another. Such a first nanoscale surface texture may be a complementary counterpart to the pattern on a surface of a plastic laboratory consumable that is to be moulded using said mould. As can therefore be appreciated using part of the mould 450, a plastic laboratory consumable having a complementary nanoscale surface texture may be manufactured using said mould.

Similarly to the part of the mould 450 depicted in FIG. 4A & 4B, a part of a mould 550 is illustrated in FIG. 5A & 5B. In Figures 5A & 5B the same structural pattern is depicted from different perspectives. The part of the mould 550 may be part of a textured metallic mould, for example. According to at least some embodiments, the nanoscale surface texture 560 comprising protrusions 551 and depressions 552 forms thereby a surface which is complementary to that of a complementary nanoscale texture of a pattern having wettability characteristics to at least a first liquid. Such a complementary nanoscale texture may be on, or form part of a surface of, a plastic laboratory consumable moulded using a mould having said first nanoscale surface texture 560, for example. Therefore, as can be appreciated from FIG. 5A & 5B, the protrusions 551 and depressions 552 form at least in part, the first nanoscale surface texture 560. Such a first nanoscale surface texture 560 is thus, complementary to a complementary nanoscale surface texture of a plastic laboratory consumable moulded using said part of the mould 550.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

At least some embodiments find industrial applicability in surface treatment applications, for example, in liquid handling applications.

### ACRONYMS LIST

- PFAS: per- and polyfluoroalkyl substances
- PFOA: perfluorooctanoic acid
- LIPSS: laser-induced periodic surface structure

### REFERENCE SIGNS LIST

| | |
|---|---|
| 110, 210 | complementary nanoscale surface texture |
| 120, 220 | pattern |
| 121, 221 | surface |
| 122, 222 | protruding edge |
| 300 | plastic pipette tip |
| 301 | tip portion |
| 302 | connecting portion |
| 450, 550 | part of a mould |
| 451, 551 | protrusion |
| 452, 552 | depression |
| 460, 560 | first nanoscale surface texture |

## Claims

1. A method of manufacturing a plastic laboratory consumable, the method comprising:
- providing a metallic mould, said metallic mould being a substantial counterpart to a plastic laboratory consumable to be moulded with said metallic mould;
- texturing a surface of the metallic mould thereby creating a textured metallic mould having a first nanoscale surface texture; and
- moulding a plastic laboratory consumable from a plastic material by using the textured metallic mould such that the plastic laboratory consumable receives a complementary nanoscale surface texture (110, 210) having at least one wettability characteristic for at least a first liquid.

2. The method according to claim 1, wherein the texturing is carried out using a nanolaser, a femtosecond laser, or a pulsed ultrashort laser.

3. The method according to claim 1 or claim 2, wherein the first nanoscale surface texture of the textured metallic mould comprises a laser-induced periodic surface structure, LIPSS.

4. The method according to any one of the preceding claims, wherein the complementary nanoscale surface texture comprises nanoscale pores and/or a nanoscale pattern.

5. The method according to any one of the preceding claims, wherein the complementary nanoscale surface texture (110, 210) comprises a repetitive partially elevated grid pattern.

6. The method according to claim 5, wherein the repetitive partially elevated grid pattern (120, 220) comprises a plurality of shapes, and wherein the shapes comprise:
- interconnected elevated edge portions (122, 222) in a form of a rectangle; and
- at least one elevated diagonal portion connecting two opposing corners of the rectangle.

7. The method according to any one of the preceding claims, wherein the first liquid is selected from the group consisting of: water, glycerol solution, protein solution, sedimented cell liquid.

8. The method according to any one of the preceding claims, wherein the at least one wettability characteristic comprises a first wettability characteristic, said first wettability characteristic being comprised in a first region of the complementary nanoscale textured surface.

9. The method according to any one of the preceding claims, wherein said first wettability characteristic for at least the first liquid is selected from the following group: lyophobic, lyophilic, hydrophobic, hydrophilic, lipophobic, lipophilic, oleophobic, or oleophilic.

10. The method according to any one of the preceding claims, wherein the at least one wettability characteristic comprises a second wettability characteristic for the first liquid, said second wettability characteristic comprised in a second region of the complementary nanoscale textured surface.

11. The method according to any one of the preceding claims, wherein said second wettability characteristic is different from the first wettability characteristic.

12. The method according to claim 10 or claim 11, wherein said second wettability characteristic is selected from the following group: lyophobic, lyophilic, for example hydrophobic, hydrophilic, lipophobic, lipophilic, oleophobic or oleophilic.

13. The method according to any one of the preceding claims, wherein the at least one wettability characteristic is defined by a contact angle from 95 to 115 degrees for the first liquid.

14. The method according to any one of the preceding claims, wherein the moulding comprises injection moulding, and wherein the plastic material comprises a thermoplastic material.

15. The method according to any one of the preceding claims, wherein the metallic mould comprises a metal material selected from the group consisting of: steel and/or stainless powder steel.

16. The method according to any one of the preceding claims, wherein the moulded plastic laboratory consumable is a pipette tip (300) comprising the complementary nanoscale surface texture (110, 210) at least on an inner surface of the pipette tip (300).

17. A moulded plastic laboratory consumable comprising at least one complementary nanoscale surface texture (110, 210) with at least one wettability characteristic for a first liquid.

18. The moulded plastic laboratory consumable according to claim 17, wherein the moulded plastic laboratory consumable is a pipette tip (300), such as a low retention pipette tip and/or a low binding pipette tip.

19. The moulded plastic laboratory consumable according to claim 18, wherein the at least one complementary nanoscale surface texture (110, 210) is present at least on an inner surface of the pipette tip (300).
